# EUROPEAN PATENT SPECIFICATION

(11) **EP 1 649 960 B1**
(45) Date of publication and mention of the grant of the patent: **14.11.2007**
(21) Application number: 05015154.7
(22) Date of filing: 31.08.2000
(51) Int. Cl.: B23H 9/14, B23H 7/26

(54) **Cnc edm drill**
Numerisch gesteuerte Funkenerosionsbohrmaschine
Machine pour forer des trous par électro-érosion à commande numérique

(43) Date of publication of application: 26.04.2006
(62) Divisional of application: 00118198.1
(73) Proprietor: Tai-I Electron Machining Co., Ltd., Tainan Hsien (TW)
(72) Inventor: Lin, Tong-Han, Tainan Hsien (TW)
(74) Representative: Viering, Jentschura & Partner

(56) References cited:
- EP-A- 1 522 365
- DE-A1- 19 804 371
- PATENT ABSTRACTS OF JAPAN vol. 1997, no. 03, 31 March 1997 (1997-03-31) & JP 08 290332 A (ERENITSUKUSU:KK), 5 November 1996 (1996-11-05)

## Description

The present invention relates to a CNC EDM DRILL.

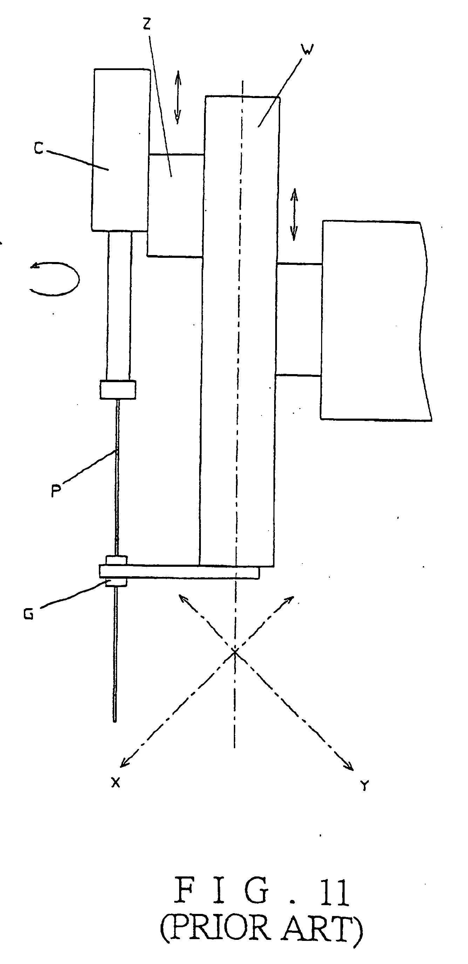

Terms used herein are defined as follows: Definition: please refer to Fig. 11.
Electrical System Conditions: refer to those conditions of the electric current outputted to the work piece from the Electrical Discharge Machine (EDM), including amperage, voltage and pulse waveform;
Electrode (P) refers to a metallic rod used to carry discharging power to the work piece and usually it is a hollow pipe to supply dielectric;
X-axis (X) and Y-axis (Y) refer to the processing direction for the electrode (P) to adjust its location on the work piece;
Z-axis (Z), provided on W-axis (W) to longitudinally move electrode (p) on W-axis (W); C-axis (C), provided on Z-axis to clamp the electrode (P) and rotates;
W-axis (W), i.e. the machine head to permit Z-axis (Z) to elevate or descend to its work starting position; and
Guide (G), provided below W-axis (W) to guide the going through electrode (P) and maintain it is in correct position.

EDM drilling: Chucking electrode (P) on the spindle. Adjust the W-axis (W) on the X-axis (X) and Y-axis (Y) to the starting position on the level of the work piece. Move the electrode guide (G) of the W-axis (W) to where above the work piece at a proper height while allowing the electrode (P) pass through the guide (G). Activate the C-axis (C) to rotate the electrode (P) and mostly supply the dielectric, and move the Z-axis (Z) according the condition between the electrode (P) and work piece to drill a hole into the work piece by electrical-discharge.

Some applications of CNC EDM Drill: In processing those dies or parts used in the area like computer parts manufacturing, aircraft engine manufacturing, medical equipments or supplies fully automated production is a requirement or a must for this type of processing.

The entire process must be fully automated to ensure the consistency of all work pieces.
That is, all process must be of computerized numerical control.
The present invention relates to a CNC EDM Drill, and generally to one comprised of an electrode capable of sensing its length, replacing, storing and selecting an electrode guide to achieve fully automated and continuous operation of hole discharge processing (drilling) on work pieces of different thickness and hole size.

Electrodes currently available in the market feature that:
1. Poor rigidity, particularly to those with smaller section area, and the rigidity could significant vary;
2. Basically made of copper alloy, showing significant difference in level glaze; new electrode may display good brightness, but it is vulnerable to be darkened once used for the processing; and
3. Non-consistency wear of the electrode even under the completely identical process conditions (including all electric system conditions, electrode and work piece, hole size and depth), and the wear of the electrode differ from time to time.

As for the process flow of the prior art, operator has to warm up the "preparative operation" before carrying out the discharging power to process. The "preparative operation" may take three to five minutes, and longer in case of changing to guide for different size of electrode. The discharging time for each hole takes like thirty to sixty seconds. For example, given with a 25 mm-thick work piece of steel alloy at 1 mm/sec of processing rate, the discharging time approximately takes less than 30 seconds. In this case, the time taken to prepare is 3 to 5 time of the processing time. The "preparative operation" flow is described as follows:
a. Have the W-axis (the fourth axis) and its electrode guide moved to the discharging point and the guide is 4 - 10 mm high over the work piece level;
b. Proper chuck the electrode and move Z-axis for the electrode to pass through the electrode guide and exit the electrode guide out of the lower end of the electrode to expose a proper length of 2-3 mm. In the manual operation flow, the operator has to: (1) manually and slowly move both of the W-axis and the electrode guide on the W-axis to approach the machining point; (2) manually measure the length of the electrode to estimate whether such length is sufficient for processing; and (3) properly chuck the electrode, move the Z-axis to allow the electrode to go through the electrode guide and protrude from the electrode guide out of the lower end of the electrode for a length of 2-3 mm (to be referred as the proper protruding length) by visual dimension. Depending on the section area of the electrode, the electrode guide is 4-10 mm above the level of the work piece. To demand the consistent hole-size and the correct hole-depth, the error should be as least as possible. However, it is very difficult to achieve such minimized error simply by manual operation, thus the process is prevented from labor saving and increasing output.

To sum up, the prior art is observed with the following limitations: (1) it is impossible to achieve computerized numerical control operation for the "preparative operation". (2) It fails to detect the electrode, nor to measure the length of the electrode. (3) It is difficult to automatically replace the electrode since the electrode is practically gives no rigidity. For that reason, it prevents the use of a device like an ATC (Automatic Tool Changer) that is used by a machining center to change the tools to the spindle today. (4) It fails to automatically select different electrode guide. Within, the "preparative operation" is prevented from having computerized numerical control due to the failure to detect the electrode. In turn, automated measurement of the length of the electrode is also prevented, unreliable resulting in the failure to continuously proceed CNC EDM drilling process for two or more than two holes in identical hole-size using the same electrode.

Patent abstracts of Japan for JP 08290332 discloses a small hole electric discharge machine with an electrode replacing section comprising a spindle with a chuck for mounting and demounting a drill electrode, and an electrode storage device for storing the drill electrodes. Said drill electrodes comprise electrode holders provided at the upper end thereof, respectively, corresponding to the said chuck of the spindle such that the respective drill electrode holder can be mounted and demounted to said chuck wherein a large number of said drill electrodes are stored in said electrode storage device.

The purpose of the present invention is to provide a CNC EDM Drill, containing a means for automated exchange of the electrode. The consumed electrode or the electrode with a length not sufficient for the next round of process is automatically replaced with a new one to ensure the continuous and automated processing on two or more than two holes of the same size.

This is achieved by a CNC EDM Drill having the features in claim 1. Further preferred embodiments are described in the dependent claim 2.
Fig. 1 is a block diagram.
Fig. 2 is a drawing of a preferred embodiment of an improved optical detection.
Fig. 3 is a 3D drawing showing electrode storage device and spindle nut.
Fig. 4 is a cutaway view showing the operation of loading the electrode storage device and the spindle nut.
Fig. 5 is a cutaway view showing the operation of unloading the electrode storage device and the spindle nut.
Fig. 6 is a front view of the electrode storage and carrousel devices.
Fig. 7 is a top view of the electrode storage and carrousel devices.
Fig. 8 is a front view of the guide selection device of the present invention.
Fig. 9 is a side view of the guide selection device.
Fig. 10 is 3D drawing showing a guide holder used by the guide selection device.
Fig. 11 is a drawing of the prior art.

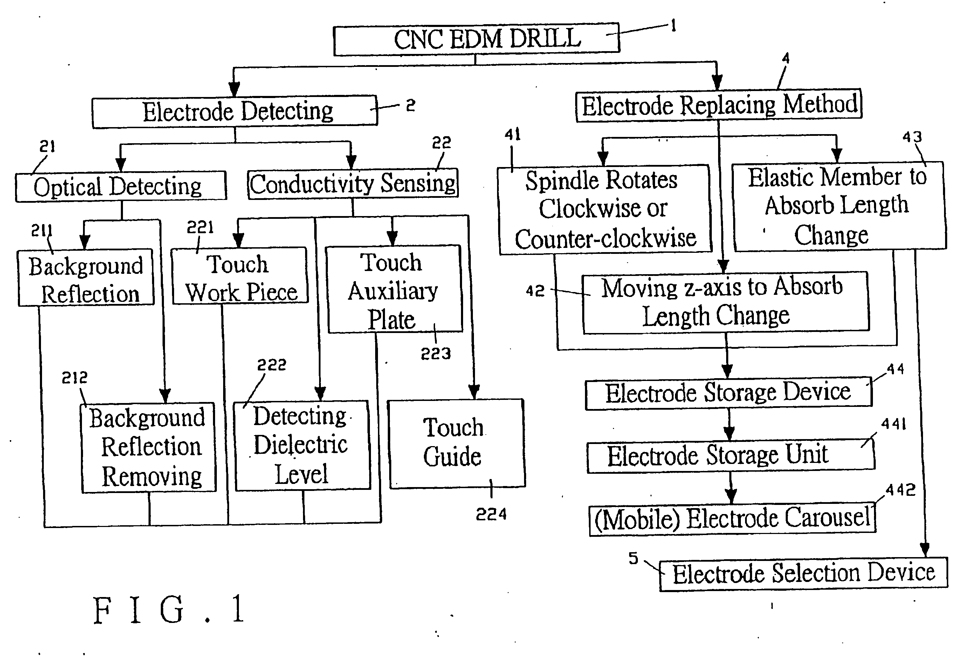

Referring to Fig. 1, the preferred embodiment of the present invention is related to a CNC EDM Drill (1) supplying each section (or each block) to the machine. The break down of these blocks is comprised of the following sections:
1. Preparing section: to automatically detect electrode and transmit the detected signals to the control unit, thus to complete the automated preparative operation;
2. Length measurement section: to automatically measure the length of the electrode;
3. Replacing section: to automatically replace and store electrode; and
4. Guide selection section: to select the proper electrode guide.

Preparative operation is automatically completed in the preparing section (a pre-requisition of fully automated operation of EDM drilling), an operation essentially using the means of Electrode Detecting (2) of the preferred embodiment. Within, the electrode length and wear are known for a specific hole before starting the machine to carry on discharging working automatically.

In the length measurement section, it allows automated measurement of the length of electrode, corresponding to electrode length measurement (3) of the preferred embodiment. This section not only achieves the preparative operation, but also eliminates the estimation and the input for Z-axis (Z) retracting (after finishing one hole) and whether the residual length is sufficient for the next hole. Once the residual length of the electrode is not sufficient for the next hole, it will be automatically moved to another machining position, or go to replacing section to be described below. While running out of electrode under drilling a hole, it permits also automatically selecting another electrode to continue that hole because of knowing the electrode length both of the used one and new one.

Replacing section allows automated replacement of electrode, corresponding to an automatic electrode replacing method (4) and an electrode storage device (44) of the preferred embodiment, thus to complete automatic and continuous processing to the multiple of holes in the same hole-size on the work piece.

Finally, the guide selection section, corresponding to an electrode guide selection device (5) of the preferred embodiment if a proper electrode guide will be selected so to complete automatic and continuous processing to the multiple holes in the different diameter on the same work piece.

Therefore, as illustrated in Fig. 1, the preferred embodiment of the CNC EDM Drill (1) is comprised of the following parts:
An Electrode Detecting (2) block contains optical detecting (21) and a conductivity sensing (22) categories. Within, the optical detecting (21) further contains background reflecting (211) or background reflection removing (212) feasible means, and the Conductivity Sensing (22) category detects conductivity changing, including touch work piece (221), detecting dielectric level (222), touch auxiliary plate (223) or touch guide (224) feasible means.

An electrode length measurement (3) contains the same method and means as those provided with the electrode detecting (2), but further apply at the right time. Touch work piece (221) has a non-consistency danger that when the surface of customer supplied work piece getting rusted by water normally worked as dielectric. Proper electrical condition must be selected to discharge the rust away and not to damage the surface when using this means is necessary. And means in conductivity sensing category are applicable as long as the electrode is protruded from the guide by a proper length. By design, for any given state only one of the feasible means shall be enough.

An electrode replacing method (4) contains two keys: By taking advantage of clockwise or counter-clockwise turning of the spindle (41), and by taking advantage of Z-axis movement (42) of the machine or an elastic member (4412) to absorb the length created upon tightening or loosening a spindle nut (B1). An electrode storage device (44) derived from the electrode replacing method (4) contains an electrode storage unit (441) and an electrode carrousel (442) (comprised of a multiple of the electrode storage devices and other components). By design, the carrousel (442) may be made mobile or fixed to a console.

An electrode guide selection device (5) is essentially comprised of a rotating plate (55) connected with multiple guide units that can be rotated in position.

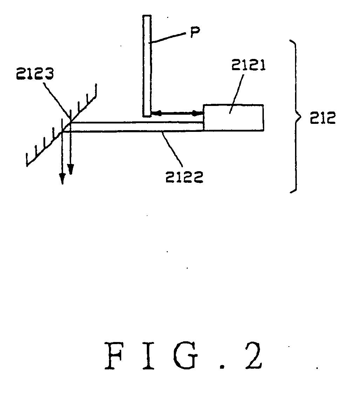

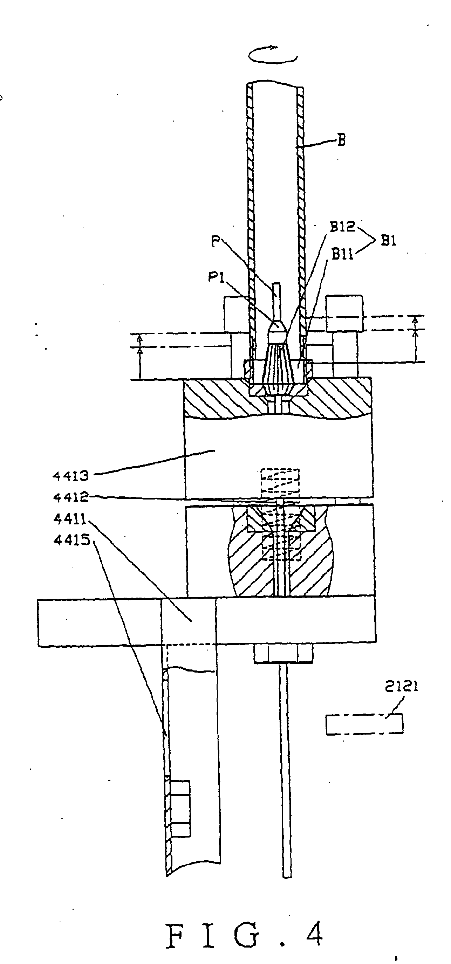

The optical detecting (21) category of electrode detecting (2) block includes the background reflecting (211) and background reflection removing (212) feasible means. Once the light emits toward an object for measurement, the light will be reflected from the object and picked up by receiver. If the volume of the object to be measured is large enough, and bright enough to reflect sufficient amount of light, the comparison method by teaching will work. However, in case of the width of the electrode is less than 0.5 mm, or the glaze of the electrode is poor, e.g., a darkened electrode, or in case of an electrode in diameter of 0.1 mm that yields weak reflection amount, then the reflection from the background must be eliminated to the minimal to ensure correct detecting. The background reflecting (211) means operates based on comparing the incoming light amount with the amount reflected by a certain object (e.g. the electrode) and background that were teach on the machine in advance. The light is first projected to the background and certainly will be reflected since there are other objects in the background (particularly so true with a machine where a console or other mechanical parts are present). The amount of the light reflected by the background is stored as a reference value M0. Upon the electrode detecting, a value, M1, is obtained from the amount of light reflected from the object to be measured. Compare incoming light with M1 and M0 values to judge whether the electrode has been detected. This comparison method is workable for a newer or thicker electrode. However, the brightness and thickness of the electrode (whether it is a new one or used, big or small in size) will vary M1 a large amount. Therefore, compromising the conditions of the electrode, it must change the background. A thinner and darker electrode (e.g. in diameter of 0.1 mm) is vulnerable to mistakes in the detection. The background reflection removing means (212) is provided to make sure that the background reflects the minimum amount of light or does not reflect any light at all. As illustrated in Fig. 2, a reflector (2123) (such as in the form of a very bright mirror) is provided and placed at a proper angle (e.g. 45 degrees) to the direction of the detecting light beam (2122) to eliminate the light beam otherwise to be reflected from the background to the detector to keep M0 as low as possible. Accordingly, the M0 measured by an optical sensor (2121) is practically reduced to a very a small value, the difference between M0 and M1 becomes meaningfully large for the incoming light comparison. Therefore, as long as incoming light approaches M1, it indicates the electrode (P) does pass through. Thus the length of the electrode may be measured at any time. In addition, the optical sensor (2121) may be provided on the electrode storage unit (441) (Fig. 4) to be described later. An opening (4416) is provided on the electrode storage unit (441) to make sure that there is no object to reflect the light from the background, so that the lowest M0 is also achieved.

As illustrated in Fig. 1, the category of conductivity sensing (22) operates according to changes of conductivity under various situations. It may include touch work piece (221), detecting dielectric level (222), touch auxiliary plate (223) and touch guide (224) feasible means. Within, the sensing method by the touch work piece (221) is to introduce non-working current into residual electrode to detect signals from the work piece disengaging from the end of the residual electrode. Said signals then are used as the data for the preparative operation in the subsequent machining.

The original length of the electrode is set at L0, and L1, the parameter of Z-axis position of the spindle is memorized upon commencing the discharge working once the electrode chucked by the spindle descends to where closing to the work piece. The working current is changed to safety test current (non-working current) upon completing the hole drilling, and the electrode detecting means detects electrode chucked by the spindle is clearing away from the work piece, and records L2, the Z-axis position parameter of said spindle. The difference between said two parameters L2 - L1 = L3 is the wear length of the electrode. Said wear length L3 then is further subtracted from the original length, L0, of the electrode to solve the residual length of the electrode.

However, should the rigidity of the electrode be too weak to touch the work piece, the electrode is vulnerable to be damaged (particularly so true in case of wild difference in the materials of electrodes from various brands). In this case, the method of detecting dielectric level (222) will be used to detect. The dielectric is injected into the electrode beforehand and the level shall cover up the upper level of the work piece. Parameters L11 and L12 respectively measured by having the electrode to touch or clear away from the working dielectric level are used to substitute L1 and L2.

Furthermore, the means of touch auxiliary plate (223) may be also applied to detect. Wherein, an auxiliary metal plate is paved in advance on the bottom of the work piece. Parameter L22 replaces L2 (with L 1 not changed) once the electrode goes the work piece to touch the auxiliary plate after the course of drilling.

In applying touch guide (224) means, a current at amperage not damaging the mechanical parts is first conducted into the electrode before the processing. Then the electrode descends to the guide provided on the W-axis, so that the shaking electrode will have to touch the guide where signals are outputted. By controlling the electrode to such extent that it sticks out of the guide for a proper length. Such position is used as the start point for the computation to allow the electrode to lower for an extra 2-3 mm, thus to automatically complete the preparative operation.

Anyway, to detect the electrode or measure its length before, during or after the electrical-discharge working will make the CNC EDM drilling process feasible. Electrode replacing method (4) and the electrode storage device (44) are described as follows:
As illustrated in Fig. 1, the electrode replacing method (4) for the EDM Drill includes the clockwise or count-clockwise turning of the spindle on the machine (41) so that the Z-axis moves to absorb change in the length of said spindle (42) [or an elastic member is used to absorb the change in the length of the spindle nut (B 1)]. The electrode storage device (44) comprised of an electrode storage unit (441) and a carousel (442), is the preferred embodiment of said exchanging method. Within, the electrode storage units (441) are provided in proper quantity, and the spindle nut (B1) properly chucking the electrode is stored in the electrode storage unit (441), which then is placed at or transferred to a position reachable in case of either of X-axis or Y-axis moves. The spindle is moved to where above the electrode storage unit (441). By control, the spindle (B) turns either clockwise or counter-clockwise and the Z-axis moves longitudinally so to combine or release the spindle nut (B1), in turn, fetching for the use or unloading the electrode vertically.

As illustrated in Fig. 4, the electrode storage unit (441) relates to a rigid member (4411) comprised of an elastic member (4412) to absorb change in length resulted from combining or releasing the spindle nut (B1) by the spindle (B), and a holder (4413) to store and restrict the rotation by the spindle nut (B1). Within, the holder (4413) of the spindle nut (B1) can be provided at the upper end of a frame (4411) while a concave that can hold local profile of the spindle nut (B1) is provided on the holder (4413). Furthermore, the elastic member (4412) is provided below the frame (4411) (not illustrated in the accompanying drawings). Additional electrode guarding duct (4414) may be provided in proper quantity on the frame (4411) and a through-hole (not illustrated in the accompanying drawings) in upside-down cone shape is formed inside the electrode-guarding duct (4414).

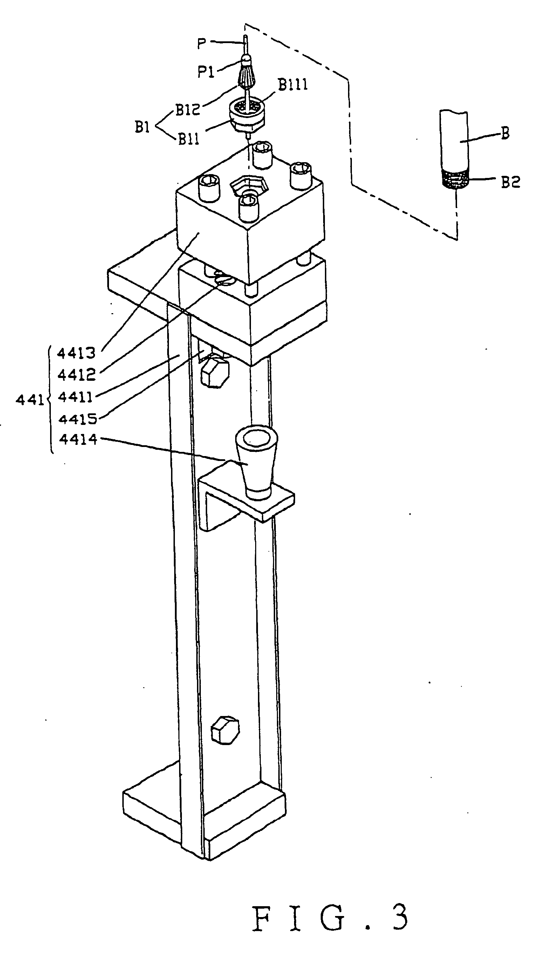

The spindle nut (B1) as illustrated in Fig. 3 has its nut (B11) containing a collet (B12) and the collet (B12) chucks both of the electrode (P) and its leak-proof seal (P1) so to directly contain said nut (B11) in the holder (4413). Finally, female threads (B111) inside the nut (B11) can be bolted to those male threads (B2) provided at the lower end of the spindle (B) to tighten up or loosen up.

Fig. 4 shows the cutaway view of chucking the electrode (P). Within, the spindle (B) descends until it holds against both of the nut (B11) of the spindle nut (B1) and the holder (4413) [The nut (B11) contains the collet (B12), the electrode (P), and the seal (P1)] to press against the holder (4413). So the holder (4413) descends and compresses the elastic member (4412) to a proper position but not all way down to the end. Simultaneously, the spindle (B) turns clockwise to engage both of the spindle nut (B1) and the spindle (B) while chucking tightly the collet (B12). The seal (P1) is pressed and the electrode properly chucked. Meanwhile, the elastic member (4412) pushes back the holder (4413) for the holder (4413) to maintain restricting the nut (B11) from rotating until it is screwed into the spindle (B).

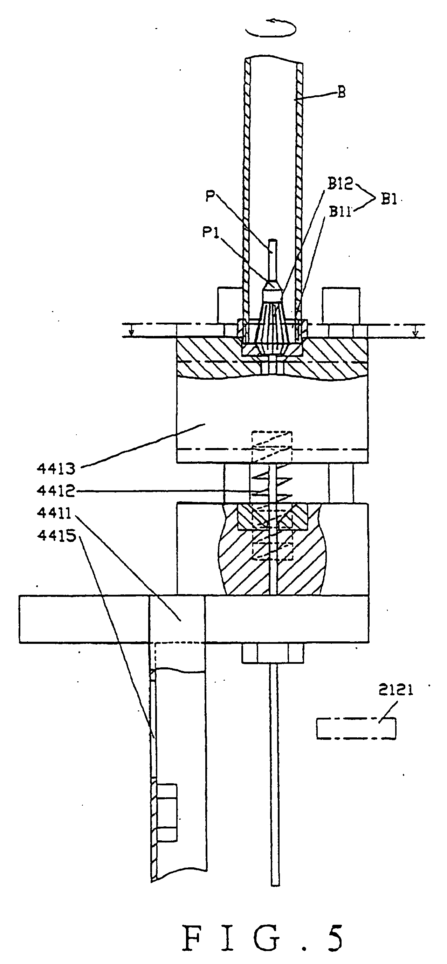

As illustrated in Fig. 5,while unloading the electrode (P), both of the spindle (B) and its spindle nut (B1) are descending to where the nut (B11) merely presses against and descend the holder (4413) until the nut (B11) clears away from the spindle (B). Within, the elastic member (4412) absorbs the change in length of the releasing nut (B11).

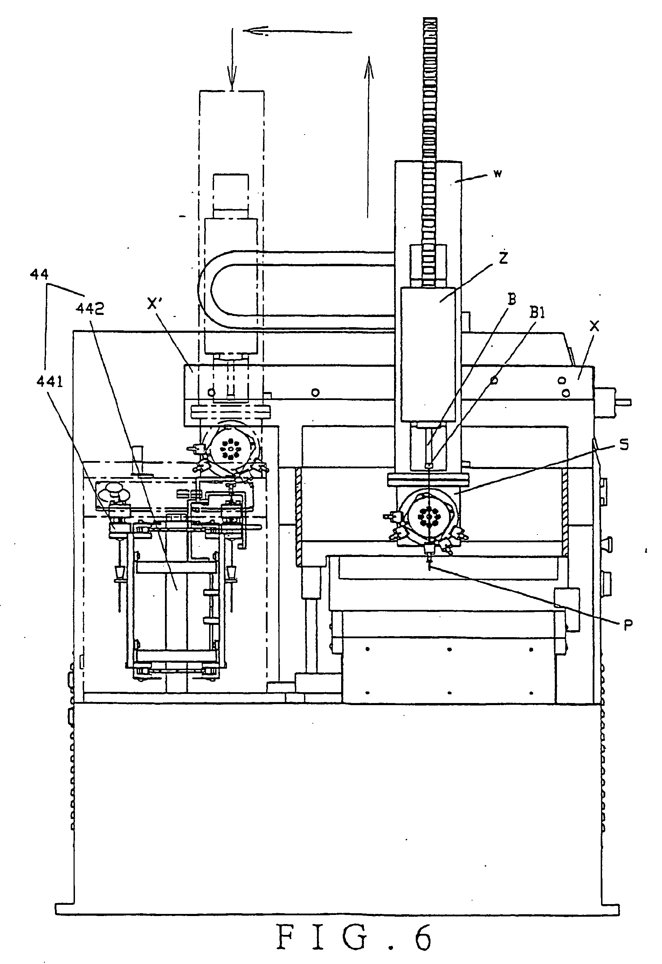

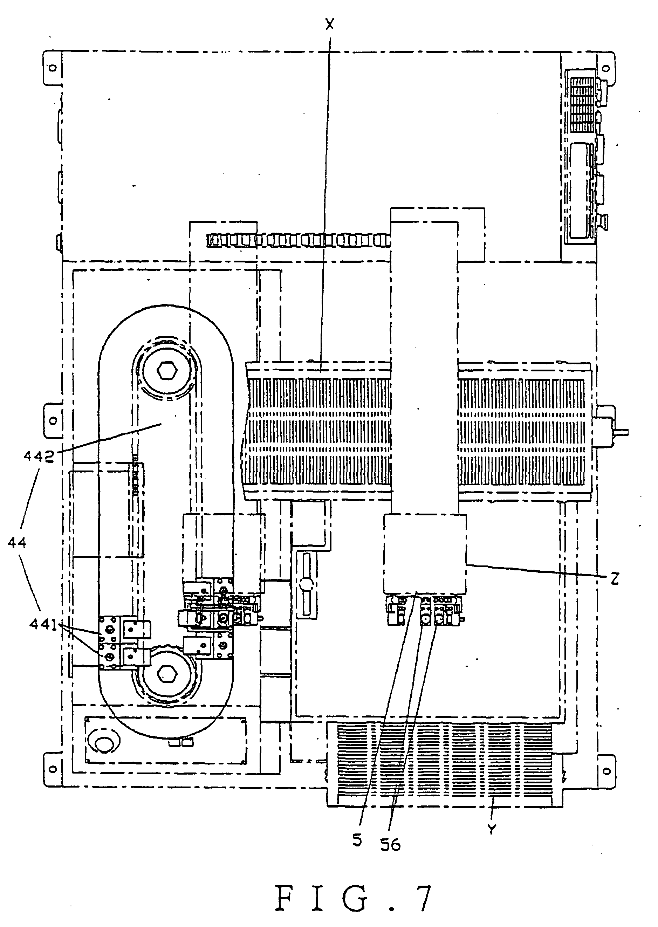

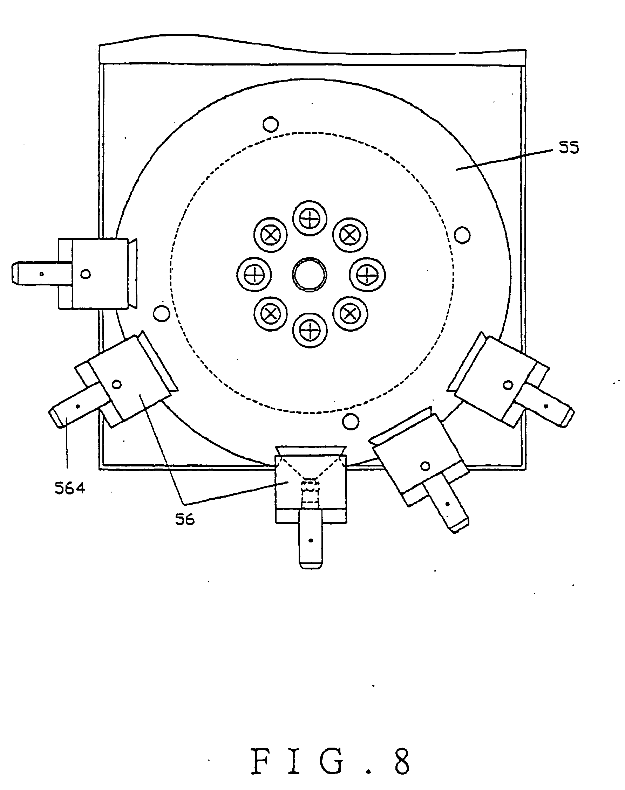

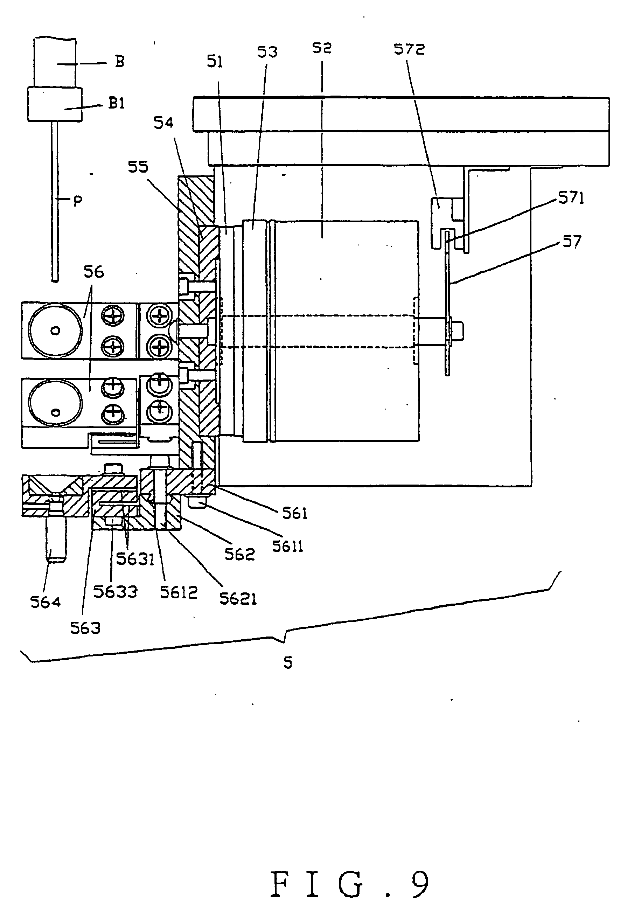

As illustrated in Figs. 6 and 7, the preferred embodiment of a complete CNC system is comprised of the electrode storage device (44) and the electrode guide selection device (5) (also refer to Figs. 8 and 9). The electrode storage device (44) is comprised of a multiple of electrode storage unit (441) and other components to form a mobile electrode carousel (442), which is connected to engage in cyclic movement. The preferred embodiment also contains a W-axis (W) operating on the existing X-axis (X), or Y-axis (Y) of the machine and the spindle (B). Within, said X-axis (X) extends itself to become an extended X-axis (X'). The construction of a cyclic connection conveyer for the electrode carousel (442) is of cyclic chains. During the electrode detecting (2) [and length measurement (3), within, as illustrated, the background reflection removing (212) of the optical detecting (21) means is applied] under normal condition, the nut (B11), the collet (B12), the electrode (P) and leak-proof seal (P1) are provided to each electrode storage unit (441). However, said spindle (B) must be empty [i.e. not screwed with a nut (B11)], otherwise, at least one set of the electrode storage unit (441) must be left empty for the entire system. That is, neither the nut (B11) nor the collet (B12) is placed in the holder (4413) of said storage unit (441) for unloading the electrode (P). In operation, the electrode storage carousel (442) may deliver a single storage unit (441) in cycle to a designated point in position while the W-axis (W) moves at the X-axis (X), or Y-axis (Y) and the extended X-axis (X') to where above the electrode (P). The W-axis (W) also moves longitudinally along the Z-axis and the spindle (B) turns clockwise or counter-clockwise to fetch or unload the electrode (P). Meanwhile, the length measurement means (3) [detecting means with background reflection removing (212)] is used to measure the length of the electrode (P). The electrode guide selection device (5) turns to select the guide unit (56) with a proper size for the insertion by the electrode (P).

As illustrated in Figs. 8 and 9, the preferred embodiment of the guide selection device (5) is comprised of encoder (51), motor (52), brake (53), gear (54), rotating plate (55), proper quantity of guide unit (56), home position plate (57). Within, the encoder (51) gives the turning angles of the rotating plate (55) or the motor (52). The brake (53) is used to restrict the gear (54), but said brake (53) may be unnecessary in case of that the gear ration is greater than a certain value (e.g. 20:1). The gear (54) is fixed to the rotating plate (55) while the circumference of said rotating plate (55) is used to hold the guide unit (56) in position. The home position plate (57) is fixed to the turning shaft of the motor (52) for both to synchronously rotate. A mark (571) is protruding from the home position plate (57) and is detected by a sensor (572) in a cycle of rotation by the home position plate (57).

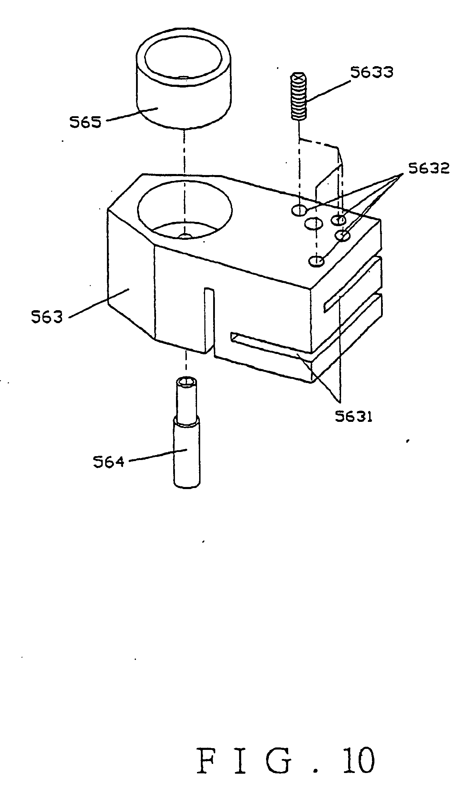

Fig. 10 shows the detailed construction of the guide unit (56). Also referring to Figs. 8 and 9, the guide unit (56) is comprised of fixation plate (561), slide (562), guide holder (563), guide (564) and hopper (565). Refer to Figs. 8 and 9 for the fixation plate (561) and the slide (562). An oval opening (not illustrated) is provided below the fixation plate (561) (not illustrated in Fig 10) for a bolt (5611) to go through and fix to the rotating plate (55) and for inching the relative position between the guide unit (56) and the rotating plate (55). A dovetail (5612) is provided to the fixation plate (561) so to relatively caulk to each other with the slide (562) while inching their relative positions. The slide (562) is further connected with a bolt (5633) to the guide holder (563) whereupon the guide (564) is provided. Grooves (5631) in proper quantity are provided on the guide holder (563), and also bolting holes (5632) and bolts (5633) in proper quantity are provided on the guide holder (563). The grooves (5631) are in parallel on a horizontal plane while the bolting holes (5632) are at a right angle to the grooves (5631) and bolted to bolts (5633). Once the bolt (5633) rotates, space inclination of the grooves (5631) changes accordingly for inching the vertical degree of the guide unit (56), thus making the guide unit (56) is in the same axis with that of the spindle (as illustrated in Fig. 9). The hopper (565) is used to guide the electrode (P) into the guide (564).

In the preferred embodiment, more than one set of guide unit (56) may be provided on the rotating plate (55) and the encoder (51) may be used to give the rotating plate (55) or the motor (52) for automated control the rotation angle of the rotating plate (55), thus the guide to the guide unit (56) required can be turned to stop at a proper position for the electrode (P) descending along the Z-axis (Z) to pass through the guide (564) and achieve the purpose of selecting the desired guide (564). The reference point in the preferred embodiment is defined by the mark (571) of the home position plate (57). Once the motor (52) starts, the sensing by a sensor (572) is designated as the marker (571) of starting point for the determination and control to ensure that the guide unit (56) rotates to its correct position.

In the following, further preferred embodiments of a CNC EDM drill will be described.

A CNC EDM Drill according to a first embodiment is comprised of a control unit, a W-axis, an electrode guide unit, a Z-axis and an electrode detecting method and means to automatically complete the following preparative operation before processing each hole by detecting signals outputted from sensing of electrode:
a. Having the W-axis and its electrode guide moving to the working point and the electrode guide to stay above the level of a work piece at a reasonable height; and
b. Moving Z-axis for the electrode to go through the electrode guide and expose the lower end of the electrode out of the electrode guide for a proper length.

According to a first aspect of the first embodiment, the electrode detecting means of the CDC EDM Drill is in the form of optical detecting with background reflection by projecting light from a light source to the background and storing the amount of reflection without the electrode (M0) or without the electrode (M1), then comparing it with the incoming amount to judge whether the electrode has been detected.

According to a second aspect of the first embodiment the electrode detecting relates to an optical detecting by removing or minimizing the background reflection.
At this, a reflector of the CDC EDM Drill may be provided at a proper angle to the direction of detecting light to eliminate the background light to a minimal value.
Also at this, objects located on the side opposite to the detector may be removed to cause the background free of reflection.

According to a third aspect of the first embodiment, the electrode detecting means is of a conductivity sensing means to detect changed conditions of electric system by introducing a weak non-machining voltage into the electrode for it to generate control signals to complete the preparative operation, when said electrode touches a guide holder, or dielectric, or an auxiliary metal plate placed at a known depth beforehand.

A CNC EDM Drill according to a second embodiment is comprised of a control unit, a Z-axis, a method and means to automatically measure and memorized the length of electrode, and transmits measured results to the control system to determine which is the next electrode will be selected to continue processing the unfinished hole or the next hole.

According to a first aspect of the second embodiment, the electrode length measurement relates to optical detecting with background reflection by projecting light from a light source to the electrode and storing the amount of reflection without electrode (M0), or with electrode (M1), then comparing it with the incoming amount to judge whether the electrode has been detected, and the length of the electrode is detected.

According to a second aspect of the second embodiment, the length of the electrode is automatically measured by having set the original length of the electrode as L0, and L1, the parameter of Z-axis position of the spindle is memorized upon commencing the discharge working once the electrode chucked by the spindle descends to where extremely closing to the work piece; then the working current is shifted to test current (non-working current) after completing the hole drilling, and the electrode detecting means detects the electrode chucked by the spindle is clearing away from the work piece or the dielectric submerging the work piece, and records L2, the Z-axis position parameter of said spindle; finally, the difference between said two parameters L2 - L1 = L3 is the wear length of the electrode, and said wear length then is further subtracted from the original length, L0, of the electrode to solve the residual length of the electrode.

A CNC EDM Drill according to a third embodiment is comprised of a control system, a Z-axis, a spindle, a spindle nut, an elastic member, methods and means of automatically replacing the electrode by having the spindle to rotate clockwise or counter-clockwise for fastening or releasing the electrode, then by controlling the displacement of the Z-axis or using the elastic member to absorb change of length created by fastening or releasing the spindle nut of the spindle.

According to a first aspect of the third embodiment, the electrode is stored in an electrode storage device and the elastic member is provided in the electrode storage device. According to a second aspect of the third embodiment, the EDM further includes a electrode guide selection device, essentially comprised of a rotating plate whereupon a multiple of guide units that can be turned to designated position are provided.

A CNC EDM Drill according to a forth embodiment is comprised of X-axis, Y-axis, Z-axis, a spindle and electrode storage devices in proper quantity to store the electrode to achieve automated replacement of the electrode by moving the spindle from the area the work piece is placed to where above the electrode storage device and either fetching out or placing back the electrode from/to electrode storage device by taking advantage of vertical movement of the Z-axis and the rotation, clockwise or counter-clockwise of the spindle.

According to another embodiment, an electrode storage device for use by an EDM Drill may contain an elastic member to absorb change of length created during fetching or laying down an electrode.

According to yet another embodiment, an electrode guide selection device for an EDM Drill, may be essentially comprised of a motor, a rotating plate and a multiple guide holder units; wherein the motor drives the rotating plate, the motor is automatically controlled to stop at a desired position, thus to turn the designate guide to where the guide center aligns to the center of the spindle.

Further, on each guide holder of the electrode guide selection device for an EDM Drill, grooves and bolts holes in proper quantity may be provided to inch right angle of the guide by turning the bolts to change the space inclination between said grooves.

## Claims

1. A CNC EDM Drill having an electrode replacing section for automatically replacing a drill electrode (P), the replacing section comprising
- a rotatable spindle (B) displaceable in direction of its longitudinal axis (Z) and having a thread (B2) formed on an end thereof, and
- an electrode storage device (44),
**characterized in that** the electrode storage device (44) has an electrode storage unit (441), comprising:
- a spindle nut (B1) threadedly engageable on and disengageable from the said thread end of the spindle (41) to thereby chuck and release, respectively, the drill electrode,
- a holder (4413) displaceable in direction of the longitudinal axis (Z) of the spindle (41) wherein the holder has a concave, in which the spindle nut (B1) is held in a manner so that rotation thereof is restricted, wherein the spindle nut (B1) held in said holder (4413) is engaged and disengaged from the thread end of the spindle (41) responsive to rotation of the spindle (41), thereby correspondingly displacing the holder (4413),
- a frame (4411), and
- an elastic member (4412) provided between the frame (4411) and the holder (4413) to elastically compensate for displacement of the holder (4413) during rotation of the spindle (41).

2. The CNC EDM Drill according to claim 1, further having an electrode guide selection section (5) comprising:
- a rotating plate (55),
- a plurality of guide units (56) provided with a respective guide tube (564) the guide units (56) being mounted to the rotating plate (55) along the circumference thereof for rotation therewith, a desired one of the plurality of guide units (56) being positionable in aligned relationship with the longitudinal axis of the spindle (B) via rotation of the rotating plate (55) by means of a motor so that the drill electrode (P) can be passed through the guide tube (564) upon descending the spindle (B) in direction of the longitudinal axis (Z) thereof.

## Patentansprüche

1. CNC-Funkenerosionsbohrmaschine mit einem Elektrodenaustauschabschnitt zum automatischen Austauschen einer Bohr-Elektrode (P), wobei der Austauschabschnitt aufweist:
- eine drehbare Spindel (B), die in Richtung ihrer Längsachse (Z) verschiebbar ist und ein Gewinde (B2) aufweist, das an einem Ende davon ausgebildet ist, und
- eine Elektroden-Aufbewahrungsvorrichtung (44),
**dadurch gekennzeichnet, dass** die Elektroden-Aufbewahrungsvorrichtung (44) eine Elektroden-Speichereinheit (441) aufweist, aufweisend:
- eine Spindelmutter (B1), die mittels Schraubens mit dem Gewinde-Ende der Spindel (41) in Eingriff und außer Eingriff gebracht werden kann, um **dadurch** die Bohr-Elektrode einzuspannen beziehungsweise zu lösen,
- einen in Richtung der Längsachse (Z) der Spindel (41) verschiebbaren Halter (4413), wobei der Halter eine Ausnehmung aufweist, in welcher die Spindelmutter (B1) in solch einer Weise gehalten ist, dass ihre Drehung eingeschränkt ist, wobei die in dem Halter (4413) gehaltene Spindelmutter (B1) in Antwort auf eine Drehung der Spindel (41) mit dem Gewinde-Ende der Spindel (41) in Eingriff und von diesem außer Eingriff gebracht wird, wodurch der Halter (4413) entsprechend verschoben wird,
- einen Rahmen (4411) und
- ein elastisches Element (4412), das zwischen dem Rahmen (4411) und dem Halter (4413) bereitgestellt ist, um die Verschiebung des Halters (4413) während der Drehung der Spindel (41) elastisch auszugleichen.

2. CNC-Funkenerosionsbohrmaschine gemäß Anspruch 1, ferner mit einem Elektrodenführungsauswahlabschnitt (5), aufweisend:
- eine Drehplatte (55),
- eine Mehrzahl von Führungseinheiten (56), die mit einem jeweiligen Führungsrohr (564) vorgesehen sind, wobei die Führungseinheiten (56) an der Drehplatte (55) entlang deren Umfang zum Drehen damit angebracht sind, wobei eine Gewünschte aus der Mehrzahl von Führungseinheiten (56) durch Drehung der Drehplatte (55) mittels eines Motors fluchtend zu der Längsachse der Spindel (B) positionierbar ist, so dass die Bohr-Elektrode (P) auf Absenken der Spindel (B) in Richtung von deren Längsachse (Z) durch das Führungsrohr (564) hindurchgeführt werden kann.

## Revendications

1. Foret de machine par électroérosion (EDM) à commande numérique (CNC) ayant une section de remplacement d'électrode permettant de remplacer automatiquement une électrode de foret (P), la section de remplacement comprenant :
- un axe rotatif (B) pouvant se déplacer dans la direction de son axe longitudinal (Z) et ayant un filetage (B2) formé sur l'une de ses extrémités, et
- un dispositif de stockage d'électrode (44),
**caractérisé en ce que** le dispositif de stockage d'électrode (44) possède une unité de stockage d'électrode (441) comprenant :
- un écrou d'axe (B1) pouvant s'engager et se dégager par filetage sur/de ladite extrémité filetée de l'axe (41) afin de bloquer et libérer respectivement l'électrode de foret,
- un support (4413) pouvant se déplacer dans la direction de l'axe longitudinal (Z) de l'axe (41), dans lequel le support possède une concavité, dans laquelle l'écrou d'axe (B1) est maintenu, de telle sorte que sa rotation est restreinte, dans lequel l'écrou d'axe (B1) maintenu dans ledit support (4413) est engagé et dégagé de l'extrémité filetée de l'axe (41) en réponse à la rotation de l'axe (41), ce qui déplace en correspondance le support (4413),
- un cadre (4411), et
- un élément élastique (4412) prévu entre le cadre (4411) et le support (4413) afin de compenser, de manière élastique, le déplacement du support (4413) au cours de la rotation de l'axe (41).

2. Foret de machine à électroérosion (EDM) à commande numérique (CNC) selon la revendication 1, ayant en outre une section de sélection de guidage d'électrode (5) comprenant :
- une plaque rotative (55),
- une pluralité d'unités de guidage (56) dotées d'un tube de guidage respectif (564), les unités de guidage (56) étant montées sur la plaque de rotation (55) sur sa circonférence, afin de tourner avec celle-ci, l'une souhaitée de la pluralité d'unités de guidage (56) pouvant être positionnée en une relation d'alignement avec l'axe longitudinal de l'axe (B) par rotation de la plaque rotative (55) au moyen d'un moteur, de telle sorte que l'électrode de foret (P) peut traverser le tube de guidage (564) lors de la descente de l'axe (B) en direction de son axe longitudinal (Z).
